# EUROPEAN PATENT APPLICATION

(11) **EP 3 361 303 A1**
(43) Date of publication of application: **15.08.2018**
(21) Application number: 18156362.8
(22) Date of filing: 12.02.2018
(51) Int. Cl.: G02B 27/00, G02B 27/01

(54) **DISPLAY SYSTEM FOR A WINDSHIELD AND A METHOD FOR CONFIGURING THE DISPLAY SYSTEM**

(30) Priority: 10.02.2017 DE 102017102704
(71) Applicant: Visteon Global Technologies, Inc., Van Buren Township, MI (US)
(72) Inventor: ZHAO, Yanning, 40789 Monheim (DE); NEBOUT, Patrick, 92210 Saint-Cloud (FR); NGUYEN, Giang-Nam, 76227 Karlsruhe (DE)
(74) Representative: Dummett Copp LLP

(57) **Abstract**

Head-up displays for vehicles are usually very cost-intensive due to the high requirements during development and manufacture. The invention relates to a display system (1) for a windshield of a means of transportation. The display system (1) comprises a projection device (2), a projection surface (3) and a control device (4). Furthermore, the display device (1) is configured with a recording device (5), which is oriented to the projection surface (3) and connected to the control device (4) by means of a first data highway (7). The projection surface (3) is configurable and likewise connected by means of a second data highway (8) to the control device (4). The invention furthermore relates to a method for configuring the display system.

## Description

The invention relates to a display system for a windshield of a vehicle, an airplane, or another means of transportation with a windshield, in which the user can maintain the posture of his head or his viewing direction. The display system comprises a liquid crystal display. Furthermore, the invention relates to a method for configuring the display system.

It is known from the prior art how to project information into the visual field of a driver, such as the driver or an automobile or a pilot, by means of a head-up display. By a head-up display, also called HUD for short, is meant a display system in which the user can maintain the posture of his head or his viewing direction substantially in the original orientation for viewing the displayed information.

Such head-up displays generally comprise an image-producing unit, which provides the information being represented in the form of an image, an optical module, which allows the beams to travel inside the head-up display as far as an exit opening and which is also called the mirror optics, and a projection surface for representing the image being generated. The optical module conveys the image to the projection surface, which is formed as a reflective, light-transparent windshield and which is also called a combiner. The driver of the vehicle sees the reflected information of the image-generating unit and at the same time the actual surroundings behind the windshield. In this way, the driver's attention, especially when driving a motor vehicle, is directed at happenings in front of the vehicle, while he can discern the information projected into his visual field. HUD systems enhance the safety of driving the vehicle.

In head-up displays one often distinguishes between virtual images and real images.

EP 0 286 962 A2 describes a laser projector, with which an image generated on a projection screen is projected onto a frequency-dependent mirror on a windshield so that the driver gets a virtual image seemingly in the visual range in front of the windshield. Furthermore, the possibility is disclosed of representing an image, generated with a laser projector, in the region of the windshield by means of a holographic optical element which is arranged on the windshield or in the vicinity of the windshield. The errors arising due to the curvature of the windshield are to be compensated by an appropriately designed optics, which is done by polished lenses or mirrors. Curved mirrors can also be used here.

With HUD systems it is desirable on the one hand for the user to have a good visual field and on the other hand for the extra display to have a good image quality with sufficient image brightness, good contrast, and high resolution, as well as minimum distortion and minimum image errors. In the past, various possibilities were pointed out for increasing the image quality. Among the factors which worsen the image quality are so-called speckles or image distortions, for example.

Speckles are produced by unevenness of an illuminated surface, each unevenness constituting a scattering center from which spherical waves emanate, interfering in turn with spherical waves of other scattering centers in the far field. The pattern is basically random, since the surfaces used in HUD systems usually have no systematic structures. Speckles need to be suppressed in order to provide a clear image within a HUD system.

From DE 10 2013 008 372 A1 there is disclosed a method in which an identical image is reflected repeatedly, one after another in time succession, on a projection surface. The individual images are distinguished from one another by the variation of the position of the object being represented in the light modulator, known as the SLM (Spatial Light Modulator) for short, by their position on the projection surface. Due to the position differences of the individual images, the interference conditions are disrupted on average and thus speckle is reduced or prevented.

According to WO 2016 072 372 A1, speckle is minimized by suitably adapted lenses or lens arrangements.

What the developments of the prior art have in common is that the elements of the particular display systems for windshields, especially mirror reflecting surfaces and diffracting optical elements, need to be specially adapted and designed for each model series of a means of transportation. This adaptation is very tedious and thus cost-intensive. Especially on account of the small number of means of transportation of each individual model series, the manufacture of a small lot size of HUD systems is also very cost-intensive. Also when the windshield is replaced the representation might be greatly impaired, so that the system needs to be adapted once more.

The problem which the invention proposes to solve is to provide a display system for a windshield which can be manufactured economically yet still meets the high demands on image quality.

The problem is solved by a display system for a windshield with the features of independent patent claim 1.

Modifications are indicated in the dependent patent claims 2 to 6.

Furthermore, the problem of the invention is to provide a method by which the quality of the images generated within a HUD system can be increased in simple manner.

The problem is solved by a method with the features of the independent patent claim 7. Modifications are indicated in the dependent patent claims 8 to 11.

The problem is solved by a display system according to the invention for a windshield, similar to other HUD systems. The display system comprises a projection device, a projection surface and a control device.

The control device, besides the functions of the present invention, may also fulfil other control functions, such as those regarding the content of a projected image.

According to the concept of the invention, the display system is designed with a recording device, which is pointed toward the projection surface.

The recording device may be, for example, a camera, which is adapted in its resolution to the corresponding requirements. Information registered by the recording device is taken by means of a first data highway to the control device. In the control device there are also stored parameters, such as those pertaining to the elements of the HUD system.

The projection surface is configurable such that different diffraction patterns can be defined. In coordination with the results of the recording, the recording device can make changes to the diffraction pattern which are then sent to the projection surface and which can be used there as the basis for the reproduction of the image for an observer. For the transmittal of new diffraction patterns, the projection surface is likewise connected by means of a second data highway to the control device.

The data highways are preferably configured in the form of a cable, but other forms of data transmittal are conceivable, such as by means of Bluetooth, infrared, or radio.

According to a first alternative embodiment of the invention, the projection surface is formed as a transparent liquid crystal display, arranged in particular in the region of the windshield. With a liquid crystal display, known as a LCD for short, any given contents can be represented by changing the orientation of the liquid crystals.

HUD systems often constitute transparent projection surfaces which are folded down or moved into the visual field of the user, without hindering the forward view of the user in the viewing direction. A recording device may then be arranged so that it scans and relays for example the transparent image surface out of sight of the user or the objects represented thereon. Virtual images can be provided with the HUD system being described.

According to a second alternative embodiment of the invention, display systems for a windshield are usually designed such in motor vehicles that the projection surface is a flexible liquid crystal display arranged on the windshield. It is an advantage that the independently produced element can easily be designed by the method described below, thanks to the improvement by means of the recording device, and also be produced economically as a result of larger manufacturing lots.

For a further virtual representation of images, it can be provided that the projection surface of the display system for a windshield has a mirror reflecting design. As soon as an image is projected onto the projection field or the projection surface, the observer receives the impression that the represented object is situated in space in the viewing direction behind the windshield.

A further advantageous embodiment of the invention consists in that the projection surface of the display system for a windshield is designed as a diffuser, so that holographic representations in improved quality can also be reproduced.

The data obtained with the recording device, which is compared by computer to an ideal and used for the improvement, can in one advantageous embodiment of the invention be stored by means of a photopolymer and saved for when it is needed. The stored data, for example, may be used for a calibration in event of a changing of components of the HUD system.

The problem is also solved by a method according to the invention for the configuring of a display system for a windshield. First of all, by means of a projection device an image is generated on a projection surface, the projection surface having an expected diffraction pattern. After this, the image is registered by means of a recording device and sent to a control device. Within the control device, the image is compared to a desired quality of the representation. Next, an improved diffraction pattern is generated to improve the representation by means of a projection surface and transmitted to the projection surface for the configuring of the projection surface. This does away with costly computations of the individual parts of the system, since an image is created first on the basis of an estimated diffraction pattern and then serves as the computational basis for an adaptation of the projection surface, so that the same components can always be used regardless of the type of the means of transportation or the model series, although each is adapted in its quality.

The method for configuring a display system for a windshield can also use the expected diffraction pattern as the image, especially in regard to the computing power of the control device. The diffraction pattern is advantageously saved as a grey scale image and can be quickly compared against the recording. For the representation of the expected diffraction pattern in this case, the phase of each beam of light is adapted depending on the grey value of each pixel of the liquid crystal display, so that a diffraction pattern can be registered by the recording device.

The comparison carried out inside the control device results in an improvement which is relayed to the projection surface. After this, an improved image can be reproduced on the projection surface, which can be configured as an element of a HUD system, such as a DOE (diffractive optical element) or HOE (holographicoptical element). The DOE serves for the forming of a beam of light, often a laser beam. The physical principle is based on diffraction by a grating. The HOE is needed for the representation of a holographic image.

According to one modification of the invention, the method for configuring a display system for a windshield is repeated one time or multiple times to enhance the image quality. For example, especially high quality can be produced for an image by iteration or generically by other mathematical algorithms.

According to one preferred embodiment of the invention, in the method for configuring a display system for a windshield the improved diffraction pattern is stored, so that when needed it can be retrieved. In particular, the manufacturing of a HOE can thus be avoided, which results in lower costs.
The improved diffraction pattern is preferably stored by means of a photopolymer.

Consequently, the generally known advantages of photopolymers can be employed.

The invention will now be further described, by way of example only, with reference to the accompanying drawings, in which:
Figure 1 shows an arrangement of a display system with a transparent liquid crystal display acting as a diffuser;
Figure 2 shows an arrangement of a display system with a reflective liquid crystal display; and
Figure 4 shows an arrangement of a display system with a reflective liquid crystal display acting as a diffuser.

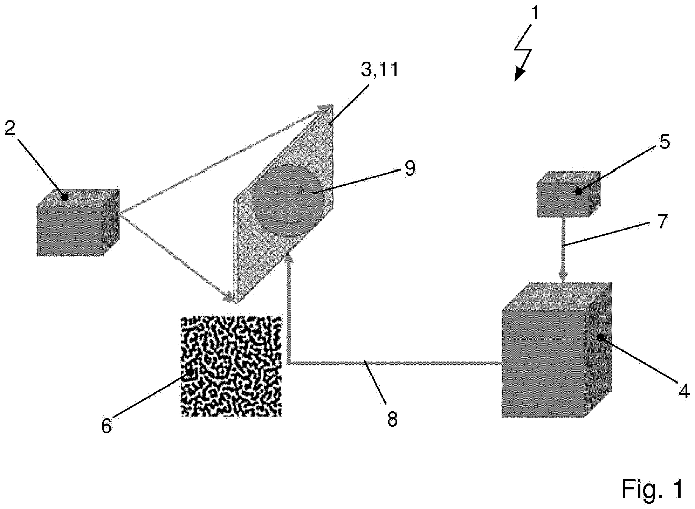

Figure 1 shows an arrangement of a display system 1 for a windshield, having a projection device 2, a projection surface 3, especially a projection screen 11, and a control device 4. At the projection surface 3 is pointed a recording device 5, which is designed to register images 9 projected onto the projection surface 3. The registered images are sent from the recording device 5 by a first data highway 7 to the control device 4.

The control device 4 computes an improved diffraction pattern 6, which in turn is transmitted from the control device 4 by means of a second data highway 8 to the projection surface 3 for further use. With the use of the improved diffraction pattern 6, losses in image quality caused by the projection surface 3 can be compensated.

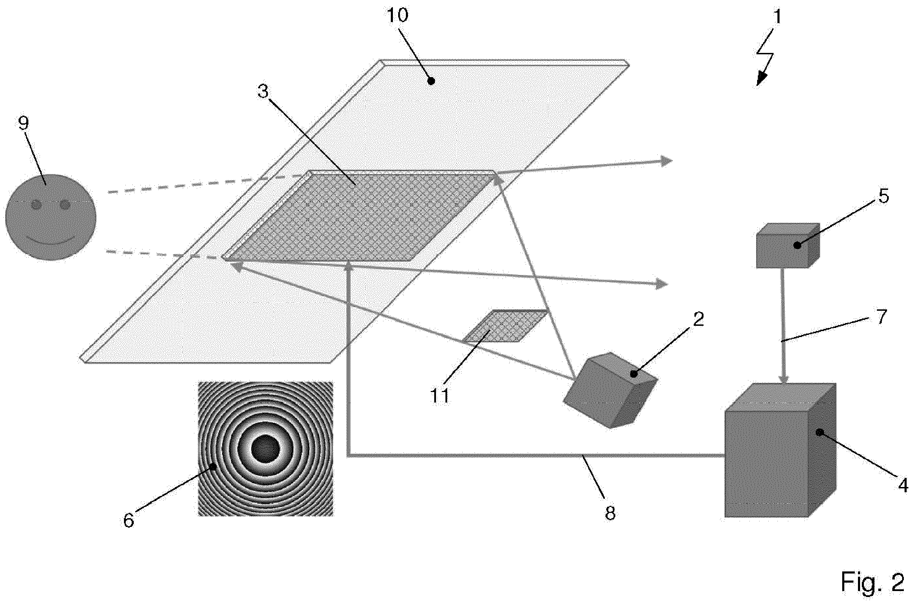

Figure 2 shows an arrangement of the display systems 1 for a windshield in which the projection surface 3 is arranged on a windshield 10. By a projection device 2, an image 9 is transmitted through a transparent projection screen 11 of an HOE onto the projection surface 3, constituting the reflecting part of an HOE. The recording device 5 is aimed at the projection surface 3 and receives the image 9, which appears virtually behind the windshield 10 out of sight of an observer. The recording is transmitted by the recording device 5 by means of the first data highway 7 to the control device 4 and evaluated within the control device 4.

The computed improved diffraction pattern 6 is then relayed by means of the second data highway 8 to the projection surface 3 for further use.

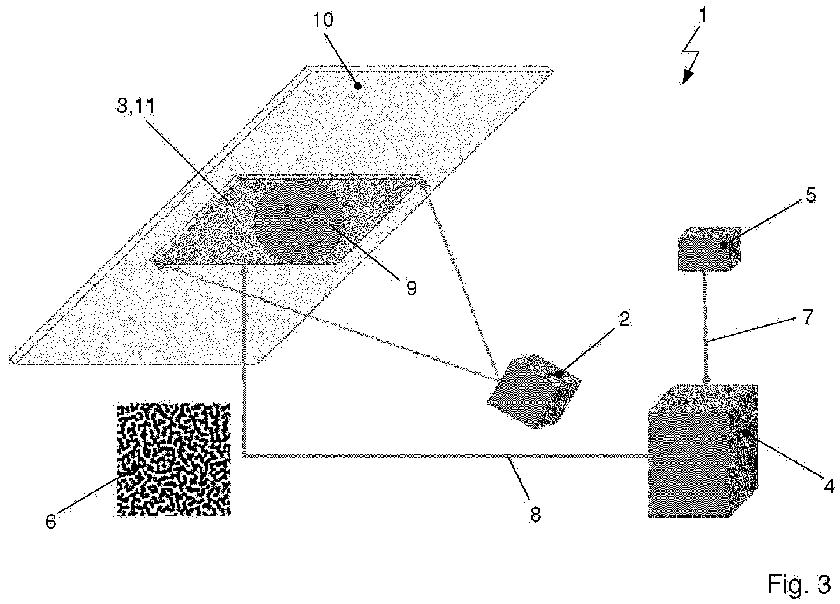

The display system 1 for a windshield can furthermore be used as well for the representation of a holographic image, according to Figure 3. For this, a projection device 2 projects an image 9 onto a projection surface 3, which is arranged on a windshield 10. The recording device 5 in order to receive the image 9 is aimed at the projection surface 3, especially a projection screen 11. The image 9 received is transmitted by means of the first data highway 7 to the control device 4 and checked for the desired quality. After an improvement, the improved diffraction pattern 6 is relayed by means of the second data highway 8 to the projection surface 3, designed as a diffuser, and used to enhance the quality of further representations.

Since the preceding display systems described in detail are sample embodiments, they may be modified as usual by the person skilled in the art to a broad degree, without leaving the scope of the invention. In particular, the specific embodiments of the projection surfaces may also have a form other than described here. Likewise, the recording device may be designed in a different form when such is required to enhance the quality. Moreover, the use of the indefinite article "a" or "an" does not rule out the respective features also being present in the plural.

### List of reference numbers

- 1: Display system
- 2: Projection device
- 3: Projection surface
- 4: Control device
- 5: Recording device
- 6: Improved diffraction pattern
- 7: First data highway
- 8: Second data highway
- 9: Image
- 10: Windshield
- 11: Projection screen

## Claims

1. A display system (1) for a windshield, comprising a projection device (2), a projection surface (3) and a control device (4), **characterized in that** a recording device (5) is formed, which is oriented to the projection surface (3) and connected to the control device (4) by means of a first data highway (7), wherein the projection surface (3) is configurable and likewise connected by means of a second data highway (8) to the control device (4).

2. The display system (1) as claimed in claim 1, **characterized in that** the projection surface (3) is configured as a light-transparent liquid crystal display arranged in particular in the region of the windshield (10).

3. The display system (1) as claimed in claim 1, **characterized in that** the projection surface (3) is configured as a flexible liquid crystal display arranged on the windshield (10).

4. The display system (1) as claimed in claim 3, **characterized in that** the projection surface (3) is configured as a mirror.

5. The display system (1) as claimed in claim 3, **characterized in that** the projection surface (3) is configured as a diffuser.

6. The display system (1) as claimed in any preceding claim, **characterized in that** a photopolymer is provided with which an improved diffraction pattern (6) can be stored.

7. A method for configuring a display system (1) for a windshield, involving the following steps:
- generating an image (9) by means of a projection device (2) on a projection surface (3), the projection surface (3) having an expected diffraction pattern;
- registering of the image (9) by means of a recording device (5) and transmitting it to a control device (4);
- comparing the image (9) against a desired quality of representation by means of the control device (4);
- generating an improved diffraction patterns (6) to improve the representation by means of the projection surface (3); and
- configuring the projection surface (3) with the aid of the improved diffraction pattern (6).

8. The method as claimed in claim 7, **characterized in that** the image (9) corresponds to the expected diffraction pattern.

9. The method as claimed in claim 7 or claim 8, **characterized in that** the steps are repeated singly or multiple times.

10. The method as claimed in claim 8 or claim 9, **characterized in that** the improved diffraction pattern (6) is stored.

11. The method as claimed in claim 10, **characterized in that** the improved diffraction pattern (6) is stored by means of a photopolymer.
